# EUROPÄISCHE PATENTSCHRIFT

(11) **EP 0 953 496 B1**
(45) Veröffentlichungstag und Bekanntmachung des Hinweises auf die Patenterteilung: **22.01.2003**
(21) Anmeldenummer: 99107297.6
(22) Anmeldetag: 14.04.1999
(51) Int. Cl.: B62D 33/037

(54) **Handhabe eines Verschlusses für Türen, Klappen oder dergleichen von Nutzfahrzeugaufbauten**
Operating device for Latching means for cargo doors, bonnets, tailgates or the like, in particular of utility vehicle superstructures
Dispositif de manipulation d'un verrouillage pour portes de chargement , capots, volets ou similaires, notamment de superstructures de véhicules utilitaires.

(30) Priorität: 29.04.1998 DE 29807739 U; 03.08.1998 DE 29813877 U
(43) Veröffentlichungstag der Anmeldung: 03.11.1999
(73) Patentinhaber: F. HESTERBERG & SÖHNE GmbH & Co. KG, D-58256 Ennepetal (DE)
(72) Erfinder: Breme, Stefan, 58339 Breckerfeld (DE); Deppe, Hans-Werner, 58135 Hagen (DE); Feinbier, Joachim, 58256 Ennepetal (DE); Gräfe, Hans-Gerd, 58332 Schwelm (DE); Kramme, Dieter, 58285 Gevelsberg (DE); Tiedtke, Henning, 58256 Ennepetal (DE); Wrobel, Margarethe, 58285 Gevelsberg (DE)
(74) Vertreter: Kneissl, Richard, Dr.

(56) Entgegenhaltungen:
- EP-A- 0 698 515
- DE-U- 9 316 195

## Beschreibung

Die Erfindung betrifft eine Handhabe eines Verschlusses für Türen, Klappen oder dergleichen von Nutzfahrzeugaufbauten, die um eine Achse schwenkbar und in zwei Teile unterteilt ist, welche durch eine parallel zur Schwenkachse verlaufende Achse gelenkig miteinander verbunden sind, wobei der der Schwenkachse benachbarte Teil (innerer Teil) der Handhabe mittels einer durch eine Feder beaufschlagte Einrastvorrichung an einem Gegenhalter verriegelbar ist und wobei der außere Teil der Handhabe derart mit der Einrastvorrichtung verbunden ist, daß durch Verschwenken des außeren Teils gegenüber dem inneren Teil der Handhabe die Einrastvorrichtung ausrastbar ist

Handhaben dieser Art können für Antriebe der verschiedensten Verschlüsse für Türen Klappen oder dergleichen von Nutzfahrzeugaufbauten verwendet werden. Sie eignen sich besonders für Drehstangenverschlüsse für Türen von Kofferaufbauten von Nutzfahrzeugen. In dieser Ausführungsform ist die Drehstange senkrecht auf oder in der Tore gelagert und besitzt an beiden Enden je ein Eingriffsteil mit einem rechtwinkelig bezüglich der Drehstange abstehenden Spannzapfen, der beim Schließen des Verschlusses jeweils hinter ein hakenförmiges Gebilde auf einem an einem festen Teil des Fahrzeugaufbaus angebrachten Gegenstück eingedreht wird. Eine derartige Verschlussvorrichtung ist aus DE 93 16 195 U bekannt.

Zum Öffnen des Verschlusses muß die Einrastvorrichtung ausgerückt werden, wofür üblicherweise an der Einrastvorrichtung eine Betätigungsfortsatz angebracht ist, der so liegt, daß beim Öffnen des Verschlusses die Einrastvorrichtung mit dem Daumen ausgerückt werden kann, während die anderen Finger die Handhabe umgreifen.

Es ist auch bekannt, die Handhabe in zwei Teile zu unterteilen, die durch eine parallel zur Schwenkachse verlaufende Achse gelenkig miteinander verbunden sind, wobei der innere Teil der Handhabe einen federbelasteten schwenkbaren Haken aufweist, der in einen entsprechenden Gegenhaken auf dem Gegenhalter arretierbar und durch Verschwenken des außeren Teils gegenüber dem inneren Teil der Handhabe aus dem Gegenhaken ausrastbar ist. Beim Öffnen des Verschlusses wird zunächst der äußere Teil gegenüber dem inneren Teil durch Ziehen verschwenkt, wodurch der Haken am inneren Teil der Handhabe vom Gegenhaken auf dem Gegenhalter freikommt, worauf durch weiteres Ziehen an der Handhabe der Verschluß geöffnet werden kann.

Wie bereits erwähnt, besteht bei der eingangs beschriebenen Handhabe der Mechanismus zum Verriegeln der Handhabe gegen den Gegenhalter aus einem schwenkbaren Haken, der in einen entsprechenden Gegenhaken auf dem Gegenhalter einrastbar ist. Die Handhaben von Verschlüsse dieser Art und insbesondere von Drehstangenverschlüssen können erheblichen Torsionskräften ausgesetzt sein, die von der Handhabe und dem Gegenhalter aufgenommen werden müssen. Bei der Verwendung eines Drehhakens, der in einen Gegenhaken eingreift, um die Handhabe am Gegenhalter zu verriegeln, ist es erforderlich, daß die Hakenkonturen derart gestaltet sind, daß sie beim Auftreten von Torsionskräften nicht außer Eingriff kommen. Dazu ist eine genaue Toleranzeinhaltung bei der Herstellung notwendig. Außerdem nutzen sich die Hakenspitzen im Laufe der Zeit ab, so daß sie beim Auftreten von Torsionskräften voneinander abrutschen können und der Verschluß aufspringt.

Der Erfindung lag die Aufgabe zugrunde, eine eingangs näher beschriebene Handhabe so weiterzubilden, daß die Handhabe auch bei Auftreten starker Torsionskräfte sich nicht vom Gegenhalter löst.

Die Lösung dieser Aufgabe besteht gemaß der Erfindung darin, daß die durch eine Feder beaufschlagte Einrastvorrichtung aus einem Schieber besteht, der in einem Haken am Gegenhalter einrastbar ist.

Die erfindungsgemaße Ausführungsform gewährleistet, daß auch bei Einhaltung weniger strenger Toleranzen bzw. nach längerer Abnutzung eine sichere Verriegelung der Handhabe am Gegenhalter gegeben ist.

Gegebenenfalls kann die Handhabe eine zusätzliche einrastende Sicherung aufweisen, die in der Sicherungsstellung das Lösen der Handhabe vom Gegenhalter verhindert. Dies gilt insbesondere für solche Handhaben, die in der Offenstellung in den Verkehrsraum hineinragen, wie z. B. für Drehstangenverschlüsse, die an seitlichen Schiebetüren von Lastfahrzeugkofferaufbauten angeordnet sind. Es gibt Länder, in denen eine solche zusätzliche Sicherung vorgeschrieben ist.

Die erfindungsgemaßen Weiterbildungen der Handhabe, die in den Unteransprüchen beschrieben sind, sind in den bevorzugten Ausführungsformen der erfindungsgemäßen Handhabe verkörpert, die nachstehend anhand der beigefügten Zeichnungen näher erläutert werden. In diesen zeigen:
Fig. 1 eine Ansicht einer erfindungsgemäßen Handhabe, die an einem üblichen unteren Verriegelungsglied eines Drehstangenverschlusses angelenkt ist;
Fig. 2 eine teilweise geschnittene Aufsicht auf die Vorrichtung von Fig. 1 mit eingerückter Einrastvorrichtung;
Fig. 3 eine ähnliche Aufsicht wie Fig. 2, jedoch mit ausgerückter Einrastvorrichtung.
Fig. 4 eine Ansicht einer erfindungsgemaßen Handhabe mit einer ersten Sicherung;
Fig. 5 eine Aufsicht auf die Vorrichtung von Fig. 4;
Fig. 6 eine ähnliche Aufsicht wie Fig. 4, jedoch mit ausgerückter Sicherung;
Fig. 7 eine ahnliche Aufsicht wie Fig. 6, jedoch zusätzlich mit ausgerückter Einrastvorrichtung;
Fig. 8 eine Ansicht einer erfindungsgemaßen Handhabe mit einer zweiten Sicherung;
Fig. 9 eine Aufsicht auf die Vorrichtung von Fig. 8;
Fig. 10 eine ähnliche Aufsicht wie Fig. 9, jedoch mit ausgerückter Sicherung;
Fig. 11 eine ahnliche Aufsicht wie Fig. 10, jedoch zusätzlich mit ausgerückter Einrastvorrichtung;
Fig. 12 eine Ansicht einer erfindungsgemäßen Handhabe mit einer dritten Sicherung;
Fig. 13 eine Aufsicht auf die Vorrichtung von Fig. 12;
Fig. 14 eine ähnliche Aufsicht wie Fig. 13, jedoch mit ausgerückter Sicherung;
Fig. 15 eine ähnliche Aufsicht wie Fig. 14, jedoch zusätzlich mit ausgerückter Einrastvorrichtung;
Fig. 16 eine Ansicht einer erfindungsgemaßen Handhabe mit einer vierten Sicherung;
Fig. 17 eine Aufsicht auf die Vorrichtung von Fig. 16; und
Fig. 18 eine ähnliche Aufsicht wie Fig. 17, jedoch mit ausgerückter Einrastvorrichtung.

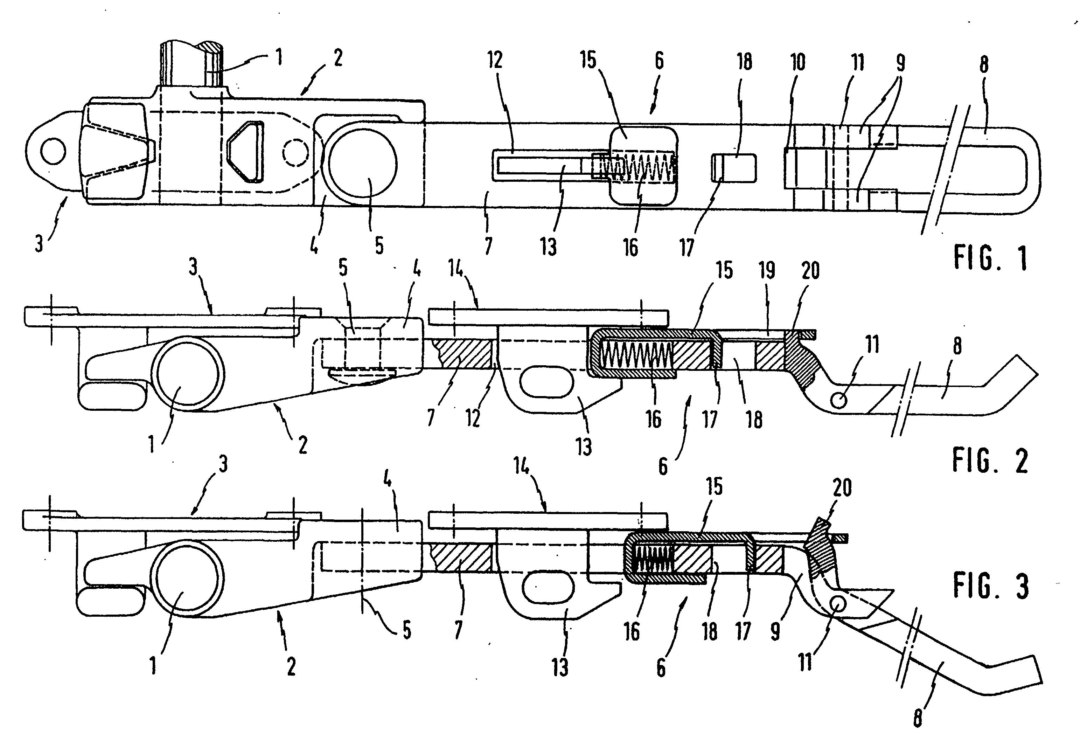

Die Fig. 1 bis 3 zeigen ein an einer Drehstange 1 befestigtes Verriegelungsglied 2, das in ein zugeordnetes Gegenstück 3 eingedreht ist. An einem seitlichen Fortsatz 4 des Verriegelungsglieds 2 ist mit Hilfe einer Niete 5 eine Handhabe 6 schwenkbar befestigt. Die Handhabe 6 besteht aus zwei Teilen 7 bzw. 8. Das innere Teil 7 ist an seinem von der Drehstange 1 abgewandten Ende in Form einer Gabel 9 ausgebildet, während das äußere Teil 8 an seinem der Drehstange 1 zugewandten Ende eine Zunge 10 aufweist, die in die Gabel 9 des inneren Handhabenteils 7 hineinragt. Mittels einer Achse 11 sind die beiden Handhabenteile 7,8 gelenkig miteinander verbunden.

Im inneren Handhabenteil 7 ist eine schlitzförmige Ausnehmung 12 vorgesehen, in die ein Haken 13 eines Gegenhalters 14 hineinragt. Der Haken 13 weist ein Loch auf, in das ein Vorhangeschloß eingehängt werden kann. Ein U-förmiger Schieber 15 greift derart durch die schlitzförmige Ausnehmung 12 hindurch, daß der Steg des U durch diese hindurchragt, wahrend die beiden Schenkel des U am inneren Handhabenteil 7 außen anliegen. Zwischen dem Steg des U und der gegenüberliegenden Wand der schlitzförmigen Ausnehmung 12 erstreckt sich eine Druckfeder 16, die den Schieber 15 unter den Haken 13 am Gegenhalter 14 drückt. Zur Begrenzung der Hin- und Herbewegung des Schiebers 15 weist dieser einen Anschlag 17 auf, der in eine Aussparung 18 im inneren Handhabenteil 7 hineinragt. Außerdem besitzt der dem Gegenhalter 14 zugewandte Schenkel des U-förmigen Schiebers 15 ein Loch 19, in das ein Zapfen 20 an der Zunge 10 des inneren Handhabenteils 7 hineinragt.

Wie ersichtlich werden beim Öffnen des Verschlusses die beiden Teile 7 und 8 der Handhabe 6 zunächst gegeneinander um die Achse 11 verschwenkt, wodurch der Schieber 15 ausgerückt wird. Nachdem dieser vom Haken 13 auf dem Gegenhalter 14 freigekommen ist, kann die Handhabe 6 insgesamt zum Öffnen des Drehstangenverschlusses verschwenkt werden.

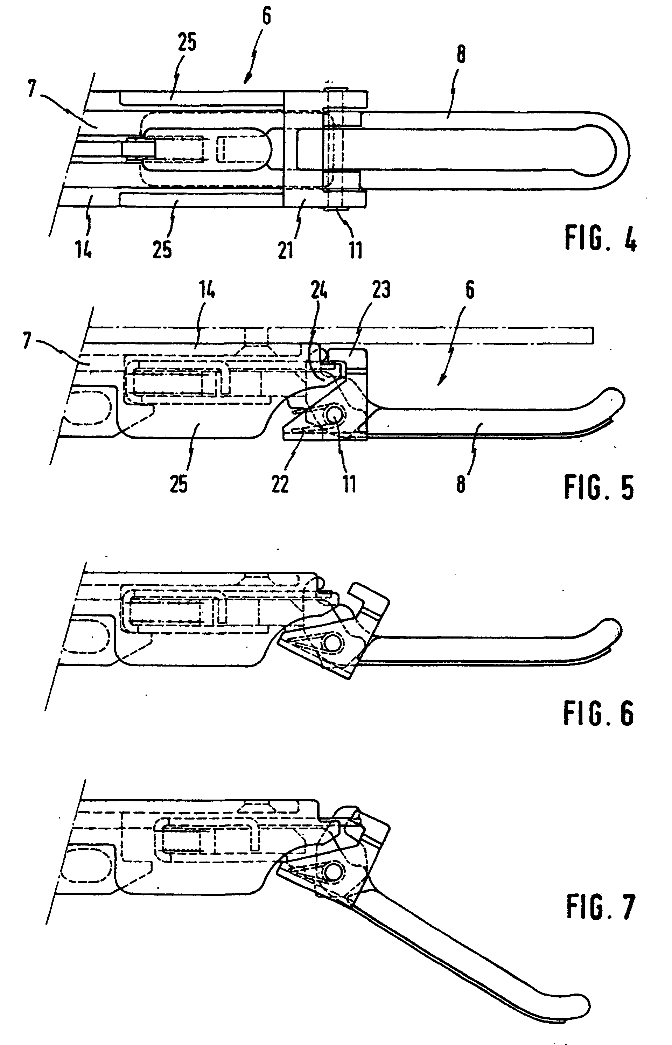

Gemäß den Fig. 4 bis 7 ist auf der Achse 11, die die beiden Teile 7,8 der Handhabe 6 gelenkig miteinander verbindet, eine Wippe 21 gelagert, die durch eine um die Achse 11 geschlungene Schenkelfeder 22 in der in Fig. 5 gezeigten Lage gehalten wird. Die Wippe 21 ist U-förmig ausgebildet und weist an ihren Schenkelenden jeweils Haken 23 auf, die jeweils einen Vorsprung 24 an Wangen 25 des Gegenhalters 14 hintergreifen. Durch Niederdrücken der Wippe 21 kommen die Haken 23 von den Vorspüngen 24 frei, so daß der äußere Teil 8 der Handhabe 6 gegenüber dem inneren Teil 7 verschwenkt werden kann, wodurch die Handhabe 6 insgesamt vom Gegenhalter 14 gelöst wird. Die Wangen 25 haben oberhalb der Vorsprünge 24 eine solche Kontur, daß beim Schließen der Handhabe 6 die Wippe 21 verschwenkt wird und dann mit ihren Haken 23 hinter die Vorsprünge 24 einrastet.

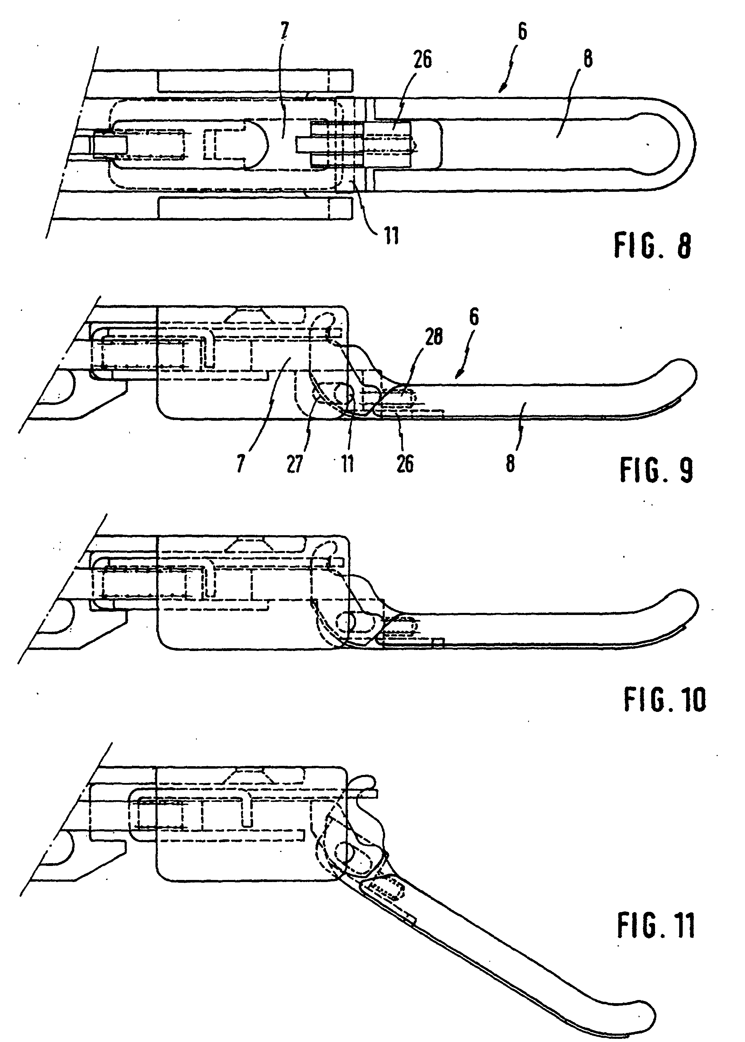

Gemaß den Fig. 8 bis 11 besteht die Sicherung aus einem weiteren Schieber 26, der ebenfalls eine U-Form aufweist und in den beiden Schenkeln des U jeweils ein Langloch 27 besitzt, mit dessen Hilfe er auf der Achse 11 verschieblich gelagert ist. Mit dem Steg des U liegt er auf dem äußeren Teil 8 der Handhabe 6 auf. Der weitere Schieber 26 liegt in der in Fig. 9 gezeigten Stellung mit seinen unteren Schenkelenden am inneren Teil 7 der Handhabe an, so daß ein gegenseitiges Verschwenken der beiden Handhabenteile 7,8 um die Achse 11 blockiert wird. Wird der weitere Schieber 26 gegen den Druck einer weiteren Feder 28 zurückgeschoben (Fig. 10), so kommt er außer Anlage am inneren Teil 7 der Handhabe 6, so daß das äußere Teil 8 der Handhabe gegenüber dem inneren Teil 7 verschwenkt werden kann, wodurch sich der Verschluß öffnen laßt.

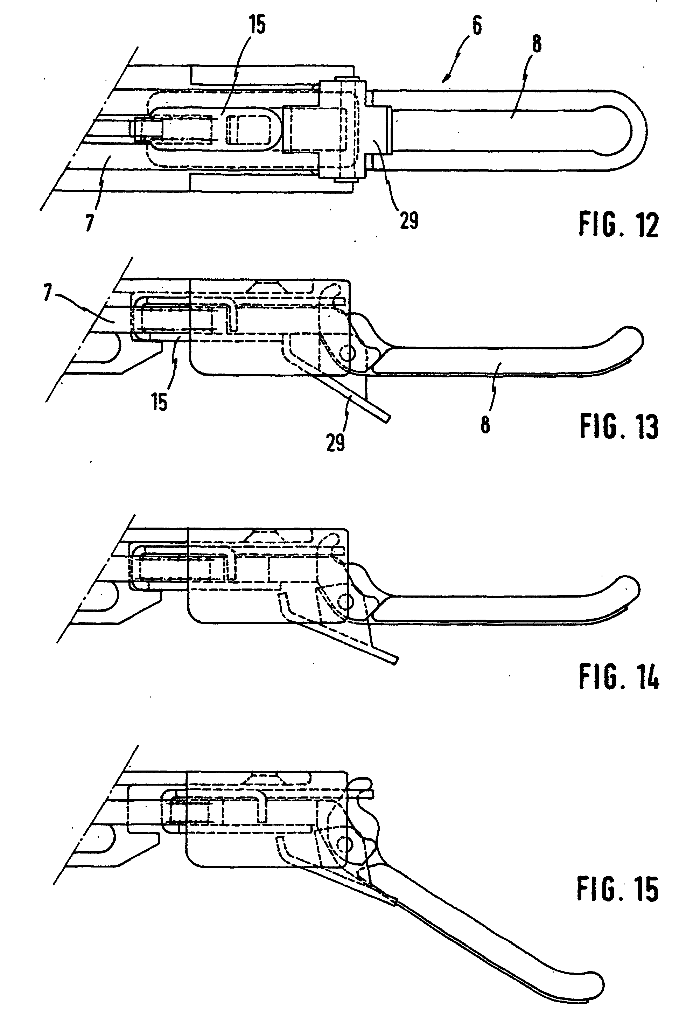

Gemaß den Fig. 12 bis 15 besteht die Sicherung wiederum aus einer Wippe 29, die ähnlich wie die Wippe 21 der Ausführungsform der Fig. 4 bis 7 durch eine (hier nicht gezeigte) Schenkelfeder in der in Fig. 13 gezeigten Lage gehalten wird. In dieser Stellung hintergreift die Wippe 29 den Schieber 15, so daß dessen Bewegung blockiert ist und der außere Teil 8 der Handhabe 6 nicht gegenüber dem inneren Teil 7 verschwenkt werden kann. Durch Niederdrücken der Wippe 29 (Fig. 14) wird diese Blockierung aufgehoben, so daß der außere Teil 8 der Handhabe 6 gegenüber dem inneren Teil 7 verschwenkt werden kann (Fig. 15) und sich der Verschluß öffnen laßt.

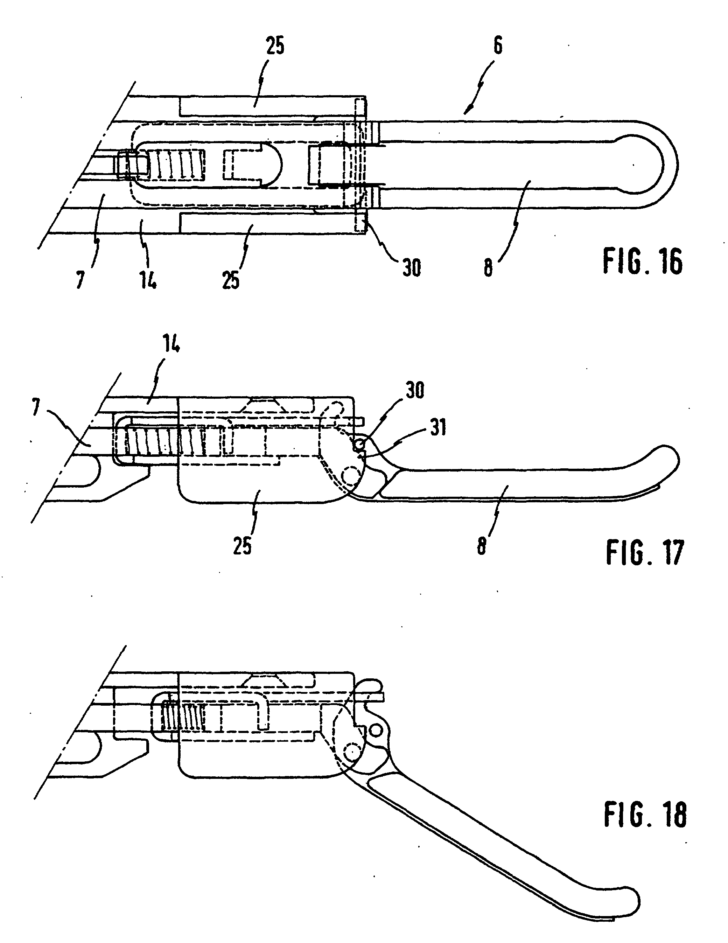

Gemaß den Fig. 16 bis 18 besteht die Sicherung aus einem Stab 30, der in der in Fig. 17 gezeigten Schließstellung Nasen 31 von seitlichen Wangen 25 am Gegenhalter 14 hintergreift. In der Schließstellung des Drehstangenverschlusses (Fig. 1 bis 3) herrscht zwischen dem Verriegelungsglied 2 und dem Gegenstück 3 eine gewisse Spannung, wodurch der innere Teil 7 der Handhabe 6 in Richtung auf ein Öffnen derselben gedrückt wird. Durch den Stab 30 wird diesem Öffnungsdruck entgegengewirkt, wodurch zwischen den beiden Teilen 7,8 der Handhabe 6 ein Drehmoment in der Weise entsteht, daß der Stab 30 in Richtung der Wurzel der Nasen 31 gedrückt wird.

## Patentansprüche

1. Handhabe (6) eines Verschlusses für Türen, Klappen oder dergleichen von Nutzfahrzeugaufbauten, die um eine Achse (1) schwenkbar und in zwei Teile (7,8) unterteilt ist, welche durch eine parallel zur Schwenkachse (1) verlaufende Achse (11) gelenkig miteinander verbunden sind, wobei der der Schwenkachse (1) benachbarte innere Teil (7) der Handhabe (6) mittels einer durch eine Feder (16) beaufschlagten Einrastvorrichung an einem Gegenhalter (14) verriegelbar ist und wobei der äußere Teil (8) der Handhabe (6) derart mit der Einrastvorrichtung verbunden ist, daß durch Verschwenken des äußeren Teils (8) gegenüber dem inneren Teil (7) der Handhabe (6) die Einrastvorrichtung ausrastbar ist, **dadurch gekennzeichnet, daß** die durch eine Feder (16) beaufschlagte Einrastvorrichtung aus einem Schieber (15) besteht, der in einen Haken (13) am Gegenhalter (14) einrastbar ist.

2. Handhabe nach Anspruch 1, **dadurch gekennzeichnet, daß** die Schwenkachse, die Drehstange (1) eines Drehstangenverschlusses ist.

3. Handhabe nach Anspruch 1 oder 2, **dadurch gekennzeichnet, daß** der Haken (13) am Gegenhalter (14) durch eine Ausnehmung (12) im inneren Teil (7) der Handhabe (6) hindurchragt.

4. Handhabe nach Anspruch 3, **dadurch gekennzeichnet, daß** der Schieber (15) U-förmig ausgebildet und bezüglich der Ausnehmung (12) so angeordnet ist, daß der Steg des U die Ausnehmung (12) durchquert und die beiden Schenkel des U auf den gegenüberliegenden Oberflächen der Handhabe (6) anliegen, derart, daß die freien Enden derselben von der Schwenkachse bzw. Drehstange (1) weggerichtet sind, wobei die Feder eine Druckschraubenfeder (16) ist und sich zwischen der Innenseite des Stegs des U und der gegenüberliegenden Wand der Ausnehmung (12) erstreckt.

5. Handhabe nach Anspruch 4, **dadurch gekennzeichnet, daß** ein Schenkel des U-förmigen Schiebers (15) einen Anschlag (17) tragt, der in eine weitere Aussparung (18) im inneren Teil (7) der Handhabe (8) hineinragt.

6. Handhabe nach Anspruch 4 oder 5, **dadurch gekennzeichnet, daß** der dem Gegenhalter (14) benachbarte Schenkel des U-förmigen Schiebers (15) gelenkig mit dem äußeren Teil (8) der Handhabe (7) verbunden ist.

7. Handhabe nach Anspruch 6, **dadurch gekennzeichnet, daß** die gelenkige Verbindung aus einem Loch (19) im Schieber (15) und einem in dieses eingreifenden Zapfen (20) am außeren Teil (8) der Handhabe (6) gebildet ist.

8. Handhabe nach einem der vorhergehenden Ansprüche, **dadurch gekennzeichnet, daß** sie eine einrastende Sicherung (21,26,29,30) aufweist, die in der Sicherungsstellung das Lösen der Handhabe (6) vom Gegenhalter (14) verhindert.

9. Handhabe nach Anspruch 8, **dadurch gekennzeichnet, daß** die Sicherung aus einer auf der Handhabe (6) gelagerten und gegen den Druck einer weiteren Feder (22) schwenkbaren Wippe (21) besteht, die einen Haken (23) aufweist, der in der Sicherungsstellung einen Vorsprung (24) am Gegenhalter (14) hintergreift.

10. Handhabe nach Anspruch 8, **dadurch gekennzeichnet, daß** die Sicherung aus einem auf der Handhabe (6) gelagerten und gegen den Druck einer weiteren Feder (28) bewegbaren weiteren Schieber (26) besteht, der in der Sicherungsstellung die beiden Teile (7,8) der Handhabe (6) in gestreckter Lage hält.

11. Handhabe nach Anspruch 8, **dadurch gekennzeichnet, daß** die Sicherung aus einer auf der Handhabe (6) gelagerten und gegen den Druck einer weiteren Feder schwenkbaren Wippe (29) besteht, die in der Sicherungsstellung eine Bewegung des Schiebers (15) blockiert.

12. Handhabe nach Anspruch 8, **dadurch gekennzeichnet, daß** die Sicherung aus einem parallel zur Verbindungachse (11) zwischen den beiden Teilen (7,8) der Handhabe verlaufenden Stab (30) besteht, der in der Sicherungsstellung eine Nase (31) am Gegenhalter (14) hintergreift.

## Claims

1. A handle (6) of a lock for doors, tailgates or the like of commercial vehicle bodies, the handle being pivotable around a pivot (1) and divided into two parts (7, 8) linked by a pivot (11) parallel to the pivot (1), wherein the inner part (7) of the handle (6) adjoining the pivot (1) is lockable to a bracket (14) by a lockable safety mechanism actuated by a spring (16) and wherein the outer part (8) of the handle is so connected to the lockable safety mechanism that it can be disengaged by pivoting the outer part (8) relative to the inner part (7), **characterised in that** the lockable safety mechanism actuated by a spring (16) comprises a slide (15) which engages in a hook (13) on the bracket (14).

2. A handle according to claim 1, **characterised in that** the pivot (1) is the revolving rod (1) of an espagnolette.

3. A handle according to claim 1 or 2, **characterised in that** at the bracket (14) the hook (13) projects through a recess (12) in the inner part (7) of the handle (6).

4. A handle according to claim 3, **characterised in that** the slide (15) is U-shaped and disposed relative to the recess (12) so that the web of the U extends through the recess (12) and the two limbs of the U abut the opposite surfaces of the handle (6) so that the free ends of the U extend away from the pivot or revolving bar (1), wherein the spring is a pressure-screw spring (16) and extends between the inner side of the web of the U and the opposite wall of the recess (12).

5. A handle according to claim 4, **characterised in that** a limb of the U-shaped slide (15) bears a stop (17) which projects into another recess (18) in the inner part (7) of the handle (8).

6. A handle according to claim 4 or 5, **characterised in that** the limb of the U-shaped slide (15) near the bracket (14) is pivotably connected to the outer part (8) of the handle (7).

7. A handle according to claim 6, **characterised in that** the pivotable connection comprises a hole (19) in the slide (15) receiving a pin (20) on the outer part (8) of the handle (6).

8. A handle according to any of the preceding claims, **characterised in that** it comprises a lockable safety mechanism (21, 26, 29, 30) which, when in the secured position, prevents the handle (6) from coming loose from the bracket (14).

9. A handle according to claim 8, **characterised in that** the lockable safety mechanism comprises a rocker (21) mounted on the handle (6), pivotable against the pressure of a second spring (22), and comprising a hook (23) which in the secured position extends behind a projection (24) on the bracket (14).

10. A handle according to claim 8, **characterised in that** the lockable safety mechanism comprises another slide (26) mounted on the handle (8), movable against the pressure of another spring (28), and, when in the secured position, holding the two parts (7, 8) of the handle (6) in the stretched position.

11. A handle according to claim 8, **characterised in that** the lockable safety mechanism comprises a rocker (29) mounted on the handle (6), pivotable against the pressure of another spring, and immobilising the slide (15) when in the secured position.

12. A handle according to claim 8, **characterised in that** the lockable safety mechanism comprises a rod (30) parallel to the pivot (11) connecting the two parts (7, 8) of the handle and extending behind a lug (31) on the bracket (14) when in the secured position.

## Revendications

1. Manette (6) d'une fermeture pour des portes, hayons ou similaires de carrosserie de véhicule utilitaire, qui peut pivoter autour d'un axe (1) et est subdivisée en deux parties (7, 8), qui sont reliées entre elles de façon articulée par un axe (11) agencé parallèlement à l'axe de pivotement (1), la partie (7) interne de la manette (6), voisine de l'axe de pivotement (1), pouvant être verrouillée sur un contre-support (14) au moyen d'un dispositif d'encliquetage sollicité par un ressort (16), et moyennant quoi la partie (8) extérieure de la manette (6) est reliée au dispositif d'encliquetage de telle sorte que le dispositif d'encliquetage peut être dégagé en faisant pivoter la partie extérieure (8) par rapport à la partie intérieure (7) de la manette (6), **caractérisée en ce que** le dispositif d'encliquetage sollicité par un ressort (16) comprend un coulisseau (15) qui peut être engagé dans un crochet (13) sur le contre-support (14).

2. Manette selon la revendication 1, **caractérisée en ce que** l'axe de pivotement est la tige de rotation (1) d'une fermeture à tige de rotation.

3. Manette selon la revendication 1 ou 2, **caractérisée en ce que** le crochet (13) sur le contre-support (14) dépasse par un évidement (12) situé dans la partie intérieure (7) de la manette (6).

4. Manette selon la revendication 3, **caractérisée en ce que** le coulisseau (15) est conçu en forme de U et est disposé par rapport à l'évidement (12) de telle façon que la barre du U traverse l'évidement (12) et que les deux branches du U s'appuient sur les surfaces opposées de la manette (6), de telle sorte que les extrémités libres de celle-ci sont orientées en s'éloignant de l'axe de pivotement et de la tige de rotation (1), le ressort étant un ressort hélicoïdal de pression (16) et s'étendant entre le côté intérieur du U et la paroi opposée de l'évidemment (12).

5. Manette selon la revendication 4, **caractérisée en ce qu'**une branche du coulisseau (15) en forme de U porte une butée (17), qui dépasse dans un autre évidemment (18) dans la partie intérieure (7) de la manette (8).

6. Manette selon la revendication 4 ou 5, **caractérisée en ce que** la branche, voisine du contre-support (14), du coulisseau (15) en forme de U est reliée de façon articulée à la partie extérieure (8) de la manette (7).

7. Manette selon la revendication 6, **caractérisée en ce que** la liaison articulée est formée d'un trou (19) situé dans le coulisseau (15) et d'un pivot (20) s'engageant dans ce trou sur la partie extérieure (8) de la manette (6).

8. Manette selon l'une quelconque des revendications précédentes, **caractérisée en ce qu'**elle présente une sécurité (21, 26, 29, 30) à encliquetage, qui empêche le détachement de la manette (6) du contre-support (14) dans la position de sécurité.

9. Manette selon la revendication 8, **caractérisée en ce que** la sécurité comprend une bascule (21) logée sur la manette (6) et pouvant basculer contre la pression d'un autre ressort (22), qui présente un crochet (23), qui prend par l'arrière une saillie (24) sur le contre-support (14) dans la position de sécurité.

10. Manette selon la revendication 8, **caractérisée en ce que** la sécurité comprend un autre coulisseau (26) logé sur la manette (6) et mobile contre la pression d'un autre ressort (28), qui maintient les deux parties (7, 8) de la manette (6) dans la position étirée dans la position de sécurité.

11. Manette selon la revendication 8, **caractérisée en ce que** la sécurité comprend une bascule (29) logée sur la manette (6) et pouvant pivoter contre la pression d'un autre ressort, qui bloque un déplacement du coulisseau (15) dans la position de sécurité.

12. Manette selon la revendication 8, **caractérisée en ce que** la sécurité comprend une barre (30) agencée parallèlement à l'axe de liaison (11) entre les deux parties (7, 8) de la manette, qui prend par l'arrière un ergot (31) sur le contre-support (14) dans la position de sécurité.
